# EUROPEAN PATENT SPECIFICATION

(11) **EP 2 403 760 B1**
(45) Date of publication and mention of the grant of the patent: **10.02.2016**
(21) Application number: 10707948.5
(22) Date of filing: 26.02.2010
(51) Int. Cl.: B64D 11/06, B60N 2/015, B60N 2/427, B60N 2/68

(54) **SEAT ASSEMBLY**
SITZANORDNUNG
ASSEMBLAGE DE SIÈGE

(30) Priority: 06.03.2009 GB 0903907; 10.03.2009 GB 0904092
(43) Date of publication of application: 11.01.2012
(73) Proprietor: Robinson, Dominic James, Addlestone, Surrey KT15 2NZ (GB)
(72) Inventor: Robinson, Dominic James, Addlestone, Surrey KT15 2NZ (GB)
(74) Representative: Fitchett, Stuart Paul
(86) International application number: PCT/GB2010/050345
(87) International publication number: WO 2010/100471

(56) References cited:
- EP-A1- 1 564 140
- EP-A1- 1 892 142
- GB-A- 886 691
- US-A1- 2005 140 193
- US-A1- 2005 269 451

## Description

The present invention relates to a seat assembly and particularly, but not exclusively, to a passenger seat assembly for an aircraft.

In civil aviation passenger seats are mounted within the aircraft to longitudinally aligned seat tracks.

The seats themselves are usually a twin beam structure (often circular tubes of 40 to 50 mm diameter) with the forward beam positioned just below the knee and the aft beam positioned just below, and behind, the back of the seat pan. Some newer structures have a single beam (perhaps a rectangular box section) located centrally beneath the seat pan. These structures are elevated off the floor by a plurality of legs which are moveable laterally and can be attached to the beams at a position which coincides with the longitudinal intersection of the seat tracks.

The legs typically will have a forward spar extending downwardly from the forward beam to the seat track and a rearward spar from the middle/aft of the leg structure to the seat track to a) give dimensional stability, b) support the weight of the occupant and c) resist forward movement and deformation in the event of a crash.

The seat tracks are hardened aluminium extrusions, about 30 mm wide and 11 mm high, with holes every 25.40 mm (1") and a gap of about 11 mm between each hole, so that a stud with a 10 mm waisted profile can be inserted through the hole and moved 12.70 mm (½") along the track so that the head portion of the stud engages the underside of the narrow gap section between the holes. A shear pin is then located into one of the holes which prevents the seat from moving fore and aft and thus preventing disengagement from the seat track. The seat legs, which may or may not have a linking spar between the fore and aft fixing points at floor level, normally incorporate one forward stud, two aft studs and a shear pin.

Patent documents US 2005/0140193, EP 1 892 142 and US 2005/0269451 provide examples of known types of seat structures.

According to the present invention there is provided a seat assembly comprising: at least one seat; a forward beam; and at least two legs by which the forward beam is supported, the at least one seat comprising: two side members each having a forward end and an aft end; a seat base; and a seat back, the seat base and seat back being supported by and between the side members, characterised in that the two side members are supported solely by the forward ends of the side members being attached to the forward beam and in comprising an aft beam extending between the aft ends of the side members to define two rectangular areas forming a frame with the side members and the forward beam or with the side members and parts of the forward and of the aft beam.

A seat assembly in accordance with the present invention may permit a seat to have improved functionality.

Preferably, each leg has a clamp at a top portion thereof by which it is clamped on the beam at a desired transverse direction relative to the seat, wherein the beam has a non-circular outer profile, the clamp is arranged to engage with the non-circular profile to prevent rotation of the beam within the clamp. This arrangement provides a seat assembly, particularly applicable to aircraft, wherein appropriate components can be assembled on a common forward beam to make seat assemblies having different number of seats and without the requirement to weld the side members to the forward beam.

Preferably, each leg is "L" shaped with a lower foot portion facing aft, which lower foot portion is arranged to engage with a seat track running in a longitudinal direction relative to the seat. Such an arrangement provides a cantilevered arrangement whereby the rear portion of the foot acts to retain the seat in an upright position, without restricting the leg room of a passenger behind the seat assembly if a number of rows of seats are located closely together, for example onboard an aircraft.

Advantageously, each leg has a plurality of lockable studs and a shear pin for engaging with the track, permitting the seat assembly to be located and secured in a desired position on a seating track.

Preferably, the studs and shear pin are all arranged to be locked by rotating a locking cap associated with each stud or shear pin in the clockwise direction.

Advantageously, each of the studs and the shear pin are arranged to be locked by rotation of a quarter of a turn of the locking cap, allowing for a positive locking action. Most preferably, a common drive is provided, such as a hexagonal drive.

Advantageously, the locking caps are provided with means for visually identifying whether the stud or shear pin is in a locked or unlocked position, allowing positive identification of the locked position.

Advantageously, each leg has a lower surface arranged to abut a top of the seat track, with at least one reinforcing member extending downwardly from the lower surface and arranged to be received in the track, the reinforcing member extending in a longitudinal direction. This arrangement permits the lower foot portion of a leg to be reinforced by utilising the space within the track below the floor level, thereby minimising interference with the leg room underneath the seat of the seat assembly.

Preferably, the reinforcing members are in the form of downwardly protruding longitudinal webs, for these provide great support effectively implementing the 'I'-beam principle.

The webs may be discontinuous in the region of the studs with the studs arranged to engage with said webs. This permits the necessary provision of studs at required locations, which studs extend substantially the full width of the channel provided within the seat tracks. However because the studs engage with the web they, to some degree, bridge the discontinuities in the webs.

In one embodiment, the two side members each have a clamp portion at their forward ends by which they are clamped to the forward beam. The beam has a non-circular outer profile, with each clamp being arranged to engage with the non-circular profile to prevent rotation of the side member about the beam. This arrangement provides a convenient way of securing the side member to the forward beam in any desired transverse position and restricting rotation of the side members about the beam.

Advantageously, the side members are boomerang shaped and have guides to which the seat base is mounted and along which the seat base can be displaced. Such an arrangement enables the side members to have a relatively rigid structure for a given weight of similar materials, compared to panel type side walls, and permits the guides to be incorporated directly in the side members.

The seat assembly comprising an aft beam extending between the aft ends of the side members, provides a four square construction.

The aft beam may be of circular cross-section and arranged to lie in the area behind the lumbar region of an occupant of the seat and above the knee height of the occupant of the seat, the seat further comprising an outer back portion extending above and connected at a lower end to the aft beam, the seat further comprising biasing means maintaining the back portion in a rearward biased normal position but permitting the back portion to rotate forward about the aft beam if the back portion is impacted on from behind.

A seat assembly in accordance with the invention and with the above features may overcome a problem with conventional seat designs where the seat back structure is attached to a lower aft beam. In severe crash situations the back of the seat can rotate forward and this may be exacerbated by an aft passenger falling up on the seat back forcing it forward. Because the back of conventional seats rotates about a low point below the back of the seat platform and because the passenger is constrained by a lap belt, severe injury can be caused to the spinal column and the internal organs of the passenger. Employing a seat in accordance with this embodiment of the invention, raises the aft beam to a position behind the lumbar region of an occupant and thus there is less rotational force exerted on the aft beam due to the length of the back portion being shorter, therefore less leverage is exerted upon the beam and also the back of the occupant is not forced forward at such a low point, thereby reducing the forces on the lower back and risk of spinal injury. Additionally, the aft passenger benefits from impacting against the back of the biased seat which biasing absorbs the impact.

Advantageously, the seat assembly further comprises a stop for restricting rotation of the back portion about the aft beam to a predetermined degree of rotation, wherein the stop member is arranged to be disabled to permit the back portion to rotate until substantially in a horizontal position.

The stop member prevents excessive rotation of the back portion and thus provides the seat occupant with a safety cell. However, by permitting the stop to be disabled and the back portion rotated until substantially in a horizontal position, the seat can be used to support stretchers.

Advantageously, the seat assembly comprises a plurality of seats mounted on common forward and aft beams with adjacent seats having a common side member and the aft beam extending between the aft ends of the side members. In this way different seat configurations can be made up using the same basic components and two or more seats can be mounted on single pair of seat tracks.

One embodiment of the present invention will now be described, by way of example only, with reference to the accompanying drawings, in which like numerals are used throughout to indicate like parts and of which:
Figure 1 is a perspective view of a seat assembly in accordance with the present invention, from which the seat base and seat back have been omitted to show the details of the frame;
Figure 2 is a view corresponding to that of Figure 1 but showing the seat base in the frame of the seat assembly;
Figure 3 is a side elevation of the seat assembly of Figure 1;
Figure 4 is a perspective view from below of the leg of the seat assembly of Figure 1;
Figure 5 is an enlarged view of the rear portion of the leg of Figure 4;
Figure 6 is a top perspective view of a front portion of the leg of Figure 4;
Figure 7 is a diagrammatic side elevation of the complete seat assembly of Figure 1 in a normal position;
Figure 8 corresponds to Figure 7, but shows the seat in an 'impact' position;

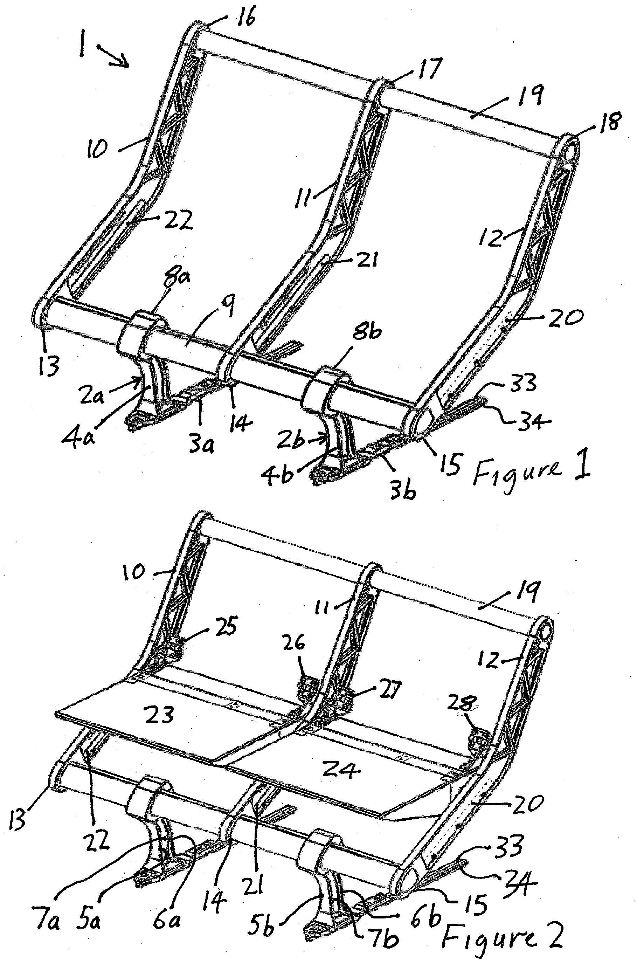

Referring now to Figures 1 to 3, a seat assembly, illustrated generally as 1, comprises two legs 2a and 2b arranged to be received and anchored to respective conventional seat tracks (not shown) commonly used on commercial passenger aircraft.

The legs 2a and 2b are each essentially an L-shape with a lower foot portion 3a, 3b facing aft. The foot portions 3a and 3b support respective vertical sections 4a and 4b. Each vertical section comprises fore and aft spatially separated flanges 5a, 6a and 5b, 6b, respectively, linked by respective central webs 7a, 7b.

Each vertical section 4a, 4b terminates in a respective clamp 8a, 8b.

The clamps 8a, 8b engage a forward beam 9, which is essentially triangular in shape with elliptical sides. However, a square or a rectangular or similar non-circular section would be equally appropriate, permitting the clamps 8a and 8b to engage with the non-circular section to prevent rotation of the forward beam 9 within the clamps 8a and 8b.

The forward beam 9 supports side members 10, 11 and 12. The side members 10, 11 and 12 each are formed with a respective clamp portion 13, 14 and 15 at their forward ends. The clamp portions 13, 14 and 15 are shaped to clamp to the forward beam 9 to prevent rotation of the side members 13 to 15 about the forward beam 9.

Each of the side members 10, 11 and 12 also have a clamp 16, 17 and 18 mounted at their aft ends, which clamps 16, 17 and 18 engage with an aft beam 19 of circular cross-section. As illustrated in Figure 1, this provides a seat assembly with a four square construction.

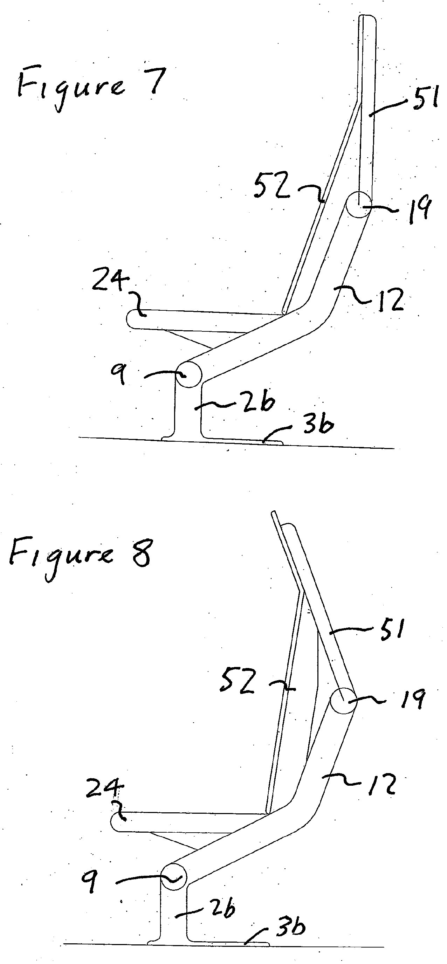

Left hand side member 12 has a seat base guide 20 on its inner side, central side member 11 has a guide 21 and a corresponding guide on the other side (not shown) and right hand side member 10 has a guide 22 on its inward facing side. As shown in Figure 2, respective pairs of side members 10 and 11, 11 and 12 support respective seat bases (23, 24) in the guides in a cantilevered arrangement. These seat bases 23 and 24 can run up and down the guides as disclosed in GB Patent Application, Publication No GB 2 387 535. The seat bases 23 and 24 are connected by the hinges 25 to 28, shown in Figure 2 to back portions, omitted from Figure 2 but described later with reference to Figures 7 and 8.

The seat assembly illustrated in Figures 1 and 2 has two seats. However, this is by way of example only and the seat assembly 1 could comprise a single seat or three or more seats, simply by selecting an appropriate length of each of the forward beam 9 and the aft beam 19 and either removing the central side member 11, in the case of a single seat, or inserting additional central side members 11, in a three or more seat arrangement. Similarly, the number of legs 2 can be selected in dependence on the number of seat tracks bridged by the seat assembly, with each leg 2 connected to the forward beam 9 at a position above the respective seat track in which it is to be located.

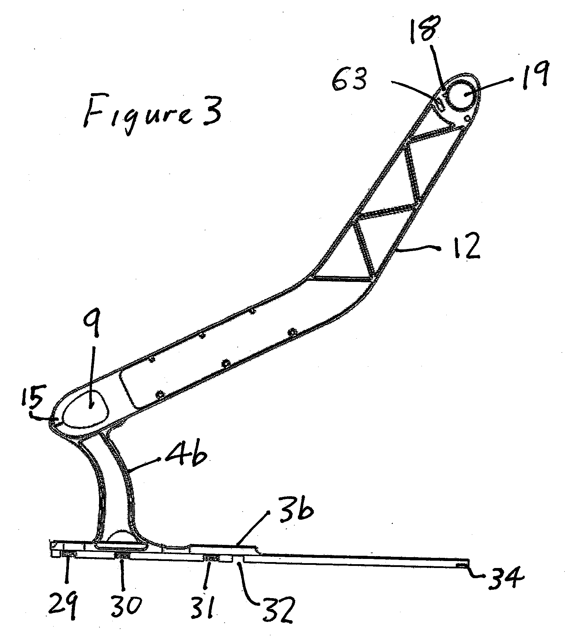

As seen from Figure 3, each leg 2a, 2b has in its foot portion 3, three apertures 29 to 31 for receiving studs to secure the leg to a seat track. There is also a fourth aperture 32 for receiving a shear pin (not shown) which locates the leg 2 in the track.

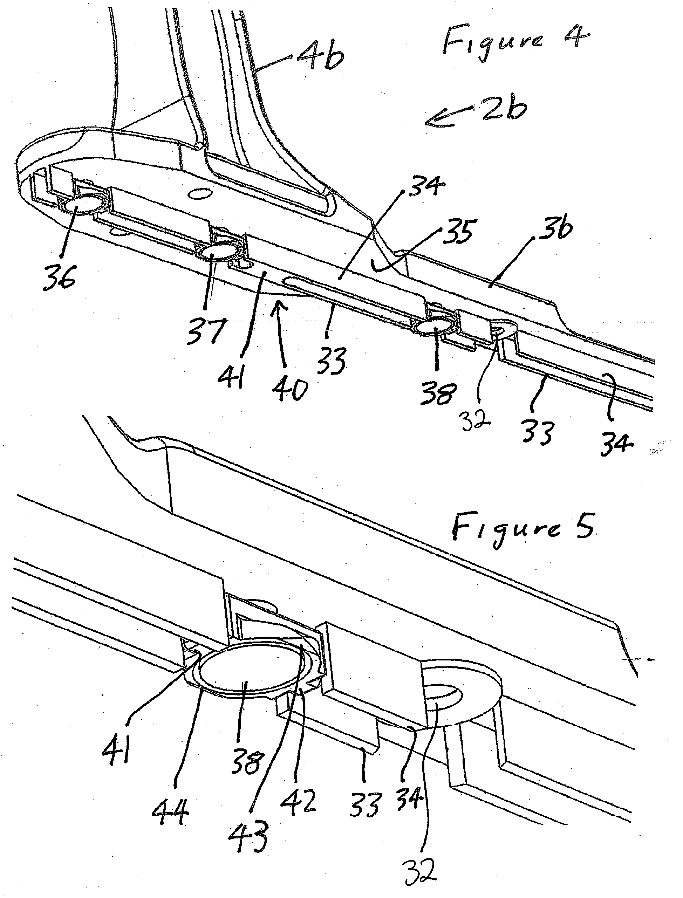

Each leg 2a, 2b of the seat assembly 1 additionally comprises a pair of downwardly extending webs 33 and 34 which are accommodated in the seat track. The features relating to the foot portion 3 of the leg are described below in greater detail with reference to Figures 4, 5 and 6.

Referring to Figures 4, 5 and 6, there is illustrated the foot portion 3b of leg 2b. This has a lower surface 35 for resting on the upper surface of a seat track. Protruding downwardly from the lower surface 35 are the two webs 33 and 34. The webs 33 and 34 are discontinuous in the regions of the apertures 29 to 32 in which the studs 36 to 38 and the shear pin are located.

The webs 33 and 34, extending vertically, resist deformation of the foot portion 3b in the vertical plane, using the 'I'-beam principle. In regions, such as region 40, of particularly high stress, the webs 33 and 34 may be joined to form a solid region 41. The webs 33 and 34 are sufficiently close to each other to permit them to fit in the channel within the seat track.

The foot portion 3b comprises a forward stud 36, a central stud 37 and a rear stud 38, all of which are identical. The stud 38, shown to an enlarged scale in Figure 5, has a front protrusion 41 and a rear protrusion 42 which engage between the webs 33 and 34 and prevent rotation of the stud, when the stud is inserted into aperture 31 (see Figure 3) from below. The stud 38 also has side protrusions 43 and 44 for engaging with the track as described below.

Studs 36, 37 and 38 are spaced from each other by an integral number of units of length wherein a unit of length is equal to the spacing between aperture locations within a seat track. On aircraft, a standard seat track has apertures at intervals of 2.54 cm (1").

When the seat assembly 1 is to be mounted in a seat track, the legs 2a, 2b are located in the correct positions on forward beam 9. The seat assembly is then positioned on the seat tracks at the correct location to permit the studs 36 to 38, pre-inserted in the legs, to drop through the apertures in the channel of the seat track. The seat assembly is then moved forwards or backwards by approximately 12.7 mm so that studs 36 are restrained by side protrusions 43, 44 engaging under the narrower portions of channel of the seat track. In this position the shear pin is aligned with an aperture in the track.

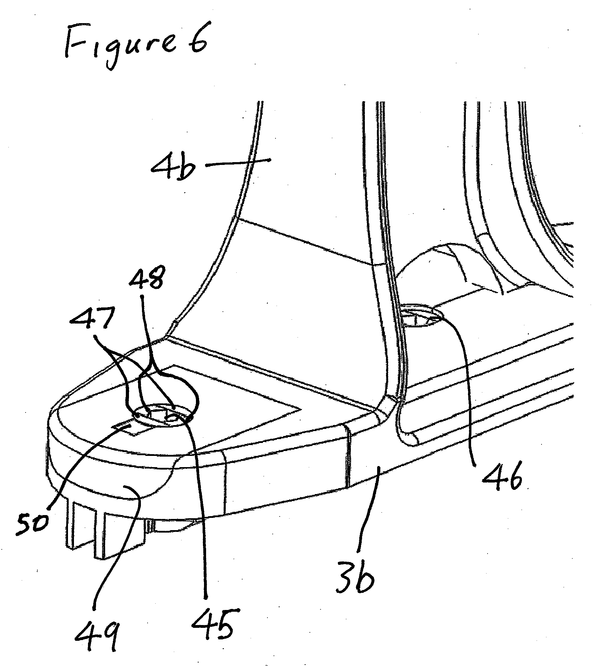

Each of the studs 36, 37, 38, and the shear pin, has a quarter turn locking cap, two of the locking caps 45 and 46 can be seen in Figure 6.

The locking cap of the shear pin is arranged such that rotation of a quarter of a turn in a clockwise direction thrusts the shear pin down into the track to engage the aperture in the track, thus preventing the legs sliding forward or backwards in the seat tracks. The shear pin is lowered by a predetermined distance with a quarter turn, preferably 2mm. The shear pin and its locking cap have a left hand thread, preferably a non-standard left hand coarse thread.

The locking caps of the studs are arranged such that rotation of a quarter of a turn in a clockwise direction raises the studs, locking the foot portion 3b of leg 2 to the seat track. The studs are raised by a predetermined distance with the quarter turn, preferably 0.5mm. The studs 36, 37 and 38 and their respective locking caps have right hand threads, preferably standard right hand fine threads.

As illustrated in Figure 6, each locking cap 45 and 46 has red sections 47 and green sections 48. A cover plate 49 also has a green section 50, such that when the cap is rotated 90° from the position indicated in Figure 6, the green sections align to indicate that the stud associated with the respective cap is correctly secured. All of the locking caps are provided with such coloured sections, and with cover plates, including the locking cap on the shear pin. All of the locking caps are provided with a common hexagonal drive, which may be operated with an Allen key.

Referring now to Figure 7 the seat assembly, as previously described, is illustrated in side elevation and additionally showing a back portion, comprising a back frame 51 and a back cushion 52. The back cushion 52 is connected to the seat base 24 by hinges 27 and 28 of Figure 2. The back frame 51 is clamped onto the aft beam 19 and is permitted to rotate about, or with, the aft beam from the position shown in Figure 7 to the position shown in Figure 8. The clamps (not shown), by which the back frame 51 is secured to the aft beam 19 are provided with a mechanism for pre-tensioning a torsion spring, one end of which engages a boss 18 on the upper end of the respective side member 12. In its preloaded state, the torsion spring maintains the back frame 51 in an essentially upright position as illustrated in Figure 7 and it resists movement except for very heavy handling or a passenger falling against the back frame 51. The clamp housing also has a conduit for a spring loaded bolt which engages a curved slot 63 in the top of the respective side member 12, preventing rotation of the back frame 51 beyond a predetermined angle, preferably 20°. This spring loaded rotation reduces potential injury to the aft passenger in a crash condition. Also, because back cushion 52 rotates about a lower axis, its trajectory is longer and thus in the break over position shown in Figure 8 it remains essentially vertical, protecting the passenger from crushing. Such crushing can be a potential risk with conventional seats where the seat back breaks at its base, sandwiching the passenger constrained by the lap belt, which can cause injury to the spinal column and internal organs. Thus, the seat assembly in accordance with the present invention as shown in Figures 7 and 8 effectively provides a safety cell to the occupant. The locking pin (not shown) may be disengaged to permit the back frame 51 to rotate to a substantially horizontal position to accommodate a casualty stretcher.

The invention has been described above by way of example only with reference to the accompanying figures. It will apparent to those skilled in the art that any number of alternative embodiments may be devised within the scope of the appended claims.

## Claims

1. A seat assembly (1) comprising: at least one seat; a forward beam (9); and at least two legs (2a, 2b) by which the forward beam (9) is supported, the at least one seat comprising: two side members (10, 11) each having a forward end and an aft end; a seat base (23); and a seat back, the seat base and seat back being supported by and between the side members, **characterised in that** the two side members are supported solely by the forward ends of the side members being attached to the forward beam and **in that** the at least one seat further comprises an aft beam (19) extending between the aft ends of the side members to define two rectangular areas forming a frame with the side members and the forward beam or with the side members and parts of the forward and of the aft beam.

2. A seat assembly as claimed in Claim 1, wherein each leg (2a, 2b) has a clamp (8a, 8b) at a top portion thereof by which it is clamped on the forward beam (9) at a desired transverse direction relative to the forward beam, wherein the forward beam (9) has a non-circular outer profile, and the clamp is arranged to engage with the non-circular profile to prevent rotation of the beam within the clamp.

3. A seat assembly as claimed in Claim 1 or 2, wherein each leg (2a, 2b) is "L" shaped with the lower foot portion (3a, 3b) facing aft, which lower foot portion is arranged to engage with a seat track running in a longitudinal direction relative to the seat.

4. A seat assembly as claimed in Claim 3, wherein each leg has a plurality of lockable studs (36-38) and a shear pin for engaging with the seat track.

5. A seat assembly as claimed in Claim 4, wherein the studs and shear pin are all arranged to be locked by rotating a locking cap (45, 46) associated with each stud or shear pin in the clockwise direction.

6. A seat assembly as claimed in Claim 5, wherein each of the studs and the shear pin are arranged to be locked by rotation of a quarter of a turn of the locking cap (45, 46).

7. A seat assembly as claimed in Claim 4 or 5, wherein the locking caps (45, 46) are provided with means for visually identifying whether the stud or shear pin is in a locked or unlocked position.

8. A seat assembly as claimed in any preceding claim, wherein the two side members (10, 11) each have a clamp portion (13, 14) at there forward end by which they are clamped to the forward beam (9) and the beam has a non-circular outer profile, each clamp being arranged to engage with the non-circular profile to prevent rotation of the side member about the forward beam.

9. A seat assembly as claimed in any preceding claim, wherein the side members (10, 11) are boomerang shaped and have guides (22) in which the seat base (23) is movable and along which the seat base can be displaced.

10. A seat assembly as claimed in any preceding claim, comprising a plurality of seats mounted on common forward and aft beams, with adjacent seats having a common side member, the forward and aft beams extending between the outer ends of the side members.

## Patentansprüche

1. Sitzbaugruppe (1), die Folgendes umfasst: mindestens einen Sitz; einen vorderen Träger (9); und mindestens zwei Schenkel (2a, 2b), mit denen der vordere Träger (9) gestützt wird, wobei der mindestens eine Sitz Folgendes umfasst: zwei Seitenelemente (10, 11), die jeweils ein vorderes Ende und ein hinteres Ende aufweisen; eine Sitzbasis (23); und eine Sitzlehne, wobei die Sitzschale und die Sitzlehne durch die Seitenelemente und zwischen denselben gestützt werden, **dadurch gekennzeichnet, dass** die beiden Seitenelemente ausschließlich durch die vorderen Enden der Seitenelemente gestützt werden, die an dem vorderen Träger befestigt sind, und dass der mindestens eine Sitz ferner einen hinteren Träger (19) umfasst, der sich zwischen den hinteren Enden der Seitenelemente erstreckt, um zwei rechteckige Bereiche zu definieren, die einen Rahmen mit den Seitenelementen und dem vorderen Träger oder mit den Seitenelementen und Teilen des vorderen und des hinteren Trägers bilden.

2. Sitzbaugruppe nach Anspruch 1, wobei jeder Schenkel (2a, 2b) eine Klammer (8a, 8b) an einem oberen Abschnitt desselben aufweist, mit der er an dem vorderen Träger (9) in einer gewünschten Querrichtung bezüglich zu dem vorderen Träger eingespannt ist, wobei der vordere Träger (9) ein nichtkreisförmiges Außenprofil aufweist und die Klammer so eingerichtet ist, dass sie in das nicht-kreisförmige Profil eingreift, um eine Drehung des Trägers innerhalb der Klammer zu verhindern.

3. Sitzbaugruppe nach Anspruch 1 oder 2, wobei jeder Schenkel (2a, 2b) "L"-förmig ist und der untere Fußabschnitt (3a, 3b) nach hinten weist, wobei der untere Fußabschnitt so angeordnet ist, dass er in eine Sitzschiene eingreift, die in Längsrichtung im Verhältnis zu dem Sitz verläuft.

4. Sitzbaugruppe nach Anspruch 3, wobei jeder Schenkel eine Vielzahl von sperrbaren Bolzen (36 bis 38) und einen Scherstift zum Eingreifen in die Sitzschiene aufweist.

5. Sitzbaugruppe nach Anspruch 4, wobei die Bolzen und Scherstifte so angeordnet sind, dass sie durch Drehen im Uhrzeigersinn einer Sperrkappe (45, 46), die jedem Bolzen oder Scherstift zugeordnet ist, gesperrt werden.

6. Sitzbaugruppe nach Anspruch 5, wobei jeder der Bolzen und der Scherstift dafür angeordnet sind, durch eine Vierteldrehung der Sperrkappe (45, 46) gesperrt zu werden.

7. Sitzbaugruppe nach Anspruch 4 oder 5, wobei die Sperrkappen (45, 46) mit Mitteln zur visuellen Erkennung bereitgestellt sind, ob sich der Bolzen oder Scherstift in einer gesperrten oder entsperrten Position befindet.

8. Sitzbaugruppe nach einem der vorhergehenden Ansprüche, wobei die beiden Seitenelemente (10, 11) jeweils einen Klammerabschnitt (13, 14) an ihrem vorderen Ende aufweisen, mit dem sie an den vorderen Träger (9) geklemmt werden, und der Träger ein nicht-kreisförmiges Außenprofil aufweist, wobei jede Klammer so angeordnet ist, dass sie in das nichtkreisförmige Profil eingreift, um eine Drehung des Seitenelements um den vorderen Träger zu verhindern.

9. Sitzbaugruppe nach einem der vorhergehenden Ansprüche, wobei die Seitenelemente (10, 11) bumerangförmig sind und Führungen (22) aufweisen, in denen die Sitzbasis (23) beweglich ist und wobei die Sitzbasis entlang derselben verschoben werden kann.

10. Sitzbaugruppe nach einem der vorhergehenden Ansprüche, die eine Vielzahl von Sitzen umfasst, die auf gemeinsamen vorderen und hinteren Trägern montiert sind, wobei benachbarte Sitze ein gemeinsames Seitenelement aufweisen und sich die vorderen und hinteren Träger zwischen den äußeren Enden der Seitenelemente erstrecken.

## Revendications

1. Assemblage de sièges (1) comportant: au moins un sège; une poutrelle à l'avant (9); et au moins deux jambes (2a, 2b) qui servent à porter la poutrelle à l'avant (9), ce sège, prévu en au moins un exemplaire, comportant: deux éléments latéraux (10, 11) ayant chacun une extrémité avant et une extrémité arrière; une assise de siège (23); et un dossier de siège, l'assise de siège et le dossier de siège étant soutenus par les éléments latéraux et entre ces éléments, **caractérisé en ce que** les deux éléments latéraux sont soutenus uniquement par les extrémités avant des éléments latéraux qui sont fixés à la poutrelle à l'avant, et **en ce que** le siège, prévu en au moins un exemplaire, comprend par ailleurs une poutrelle arrière (19) disposée entre les extrémités arrière des éléments latéraux afin de définir deux zones rectangulaires qui constituent un cadre avec les éléments latéraux et la poutrelle à l'avant ou bien avec les éléments latéraux et certaines parties de la poutrelle avant et arrière.

2. Assemblage de sièges selon la revendication 1, **caractérisé en ce que** chaque jambe (2a, 2b) comporte un collier de serrage (8a, 8b) à sa partie supérieure qui sert à la fixer à la poutrelle à l'avant (9) dans un sens transversal requis par rapport à la poutrelle à l'avant, **caractérisé en ce que** la poutrelle à l'avant (9) est d'un profil extérieur non circulaire, et **en ce que** le collier de serrage est disposé de manière à se mettre en prise avec le profil non circulaire pour empêcher la rotation de la poutrelle à l'intérieur du collier de serrage.

3. Assemblage de sièges selon la revendication 1 ou 2, **caractérisé en ce que** chaque jambe (2a, 2b) est en forme de "L", la partie inférieure du pied (3a, 3b) étant tournée vers l'arrière, et disposée de manière à se mettre en prise avec une voie de guidage des sièges s'étendant dans un sens longitudinal par rapport au siège.

4. Assemblage de sièges selon la revendication 3, **caractérisé en ce que** chaque jambe comporte une pluralité de boulons verrouillables (36-38) ainsi qu'une goupille de cisaillement pour la mise en prise avec la voie de guidage des sièges.

5. Assemblage de sièges selon la revendication 4, **caractérisé en ce que** les boulons et la goupille de cisaillement peuvent tous être verrouillés en tournant, dans le sens des aiguilles d'une montre, un chapeau de blocage (45, 46) associé à chaque boulon ou goupille de cisaillement.

6. Assemblage de sièges selon la revendication 5, **caractérisé en ce que** chacun des boulons et la goupille de cisaillement peuvent être verrouillés en tournant le chapeau de blocage (45, 46) d'un quart de tour.

7. Assemblage de sièges selon la revendication 4 ou 5, **caractérisé en ce que** les chapeaux de blocage (45, 46) sont dotés de moyens servant à déteerminer visuellement si le chapeau de blocage ou la goupille de cisaillement est verrouillé ou déverrouillé.

8. Assemblage de sièges selon l'une quelconque des revendications précédentes, **caractérisé en ce que** les deux éléments latéraux (10, 11) comportent chacun une partie de serrage (13, 14) à leur extrémité avant qui sert à les verrouiller sur la poutrelle à l'avant (9), et **en ce que** cette poutrelle est d'un profil extérieur non circulaire, chaque collier de serrage étant disposé de manière à se mettre en prise avec le profil non circulaire pour empêcher la rotation de l'élément latéral autour de la poutrelle à l'avant.

9. Assemblage de sièges selon l'une quelconque des revendications précédentes, **caractérisé en ce que** les éléments latéraux (10, 11) sont en forme de boomerang et comportent des guides (22) dans lesquels l'assise de siège (23) peut se déplacer et le long desquels l'assise de siège peut se déplacer.

10. Assemblage de sièges selon l'une quelconque des revendications précédentes, comportant une pluralité de sièges montés sur des poutrelles avant et arrière communes, les sièges adjacents se partageant un même élément latéral, et les poutrelles avant et arrière étant disposées entre les extrémités extérieures des éléments latéraux.
